# EUROPEAN PATENT APPLICATION

(11) **EP 1 251 712 A2**
(43) Date of publication of application: **23.10.2002**
(21) Application number: 02007347.4
(22) Date of filing: 05.04.2002
(51) Int. Cl.: H04Q 11/00

(54) **Wavelength group wavelength converter and wavelength group exchange using the same**

(30) Priority: 18.04.2001 JP 2001118969
(71) Applicant: NEC CORPORATION, Tokyo (JP)
(72) Inventor: Araki, Soichiro, Minato-ku, Tokyo (JP)
(74) Representative: VOSSIUS & PARTNER

(57) **Abstract**

To obtain a wavelength group wavelength converter in which each wavelength group can be switched without decreasing any efficiency of an exchange while a miniaturization and a lower cost are kept. An input wavelength group is demultiplexed into individual wavelengths by an optical demultiplexer. The demultiplexed wavelengths are converted by wavelength converters, and multiplexed into the wavelength group by an optical multiplexer. The optical demultiplexer employs an element (Arrayed-Waveguide Grating or the like) capable of demultiplexing the wavelength groups cyclically, making it possible to convert wavelengths for a wavelength group composed of different wavelengths, whereby it is possible to eliminate a collision between the same wavelength groups at the time of switching each wavelength group in a wavelength group exchange.

## Description

The present invention relates to a wavelength group wavelength converter and a wavelength group exchange using the converter, and more particularly to a wavelength group wavelength converter and a wavelength group exchange using the converter in an optical communication system of a WDM (Wavelength Division Multiplex) method.

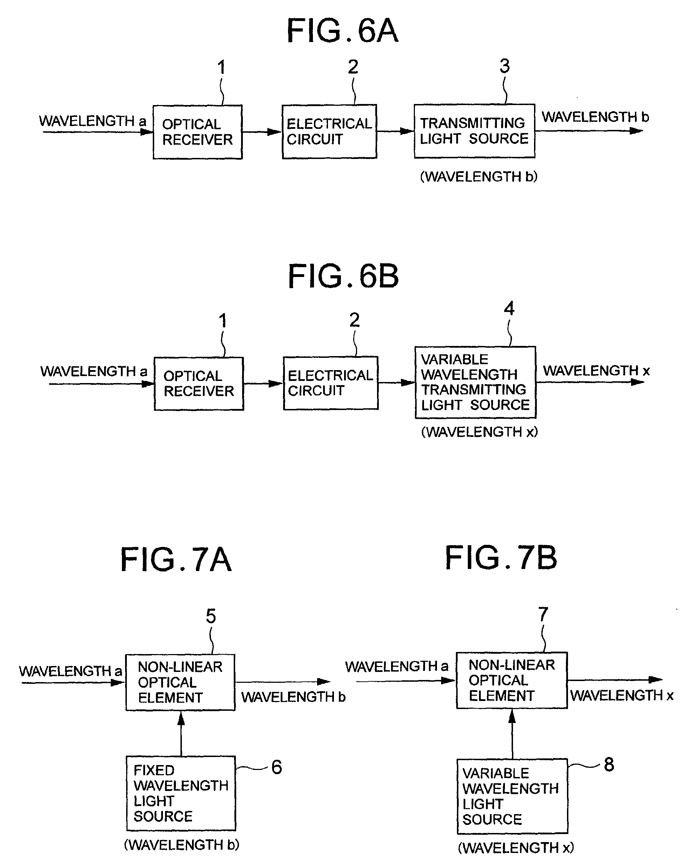

A wavelength converter for use in the optical communication system is configured as shown in FIG. 6, for example. Referring to FIG. 6A, an input signal having wavelength a is input into an optical receiver 1, and converted into an electrical signal. The electrical signal passes through electrical processings such as amplification and waveform shaping in an electrical circuit 2 to become a modulation signal for a transmitting light source 3, which outputs a signal having wavelength b.

Referring to FIG. 6B, a variable wavelength transmitting light source 4 is employed to emit a light having arbitrary wavelength x as the output wavelength, although the transmitting light source 3 of FIG. 6A emits a signal having the fixed wavelength b.

The wavelength converter as shown in FIGS. 6A and 6B uses a wavelength conversion method based on a light-electricity-light conversion. FIG. 7 shows examples of a wavelength conversion method based on a light-light conversion. In FIG. 7A, a signal light having the input wavelength a is input into a non-linear optical element 5 composed of a semiconductor device or the like and mixed with a light having the fixed wavelength b from a light source 6 to obtain an output signal light having the wavelength b. In FIG. 7B, a light source 8 having a variable wavelength x is employed, instead of the fixed wavelength light source 6 of FIG. 7A, to generate an output wavelength equal to the wavelength x of the variable wavelength light source 8, thereby making it possible to generate arbitrary wavelength x.

The above wavelength conversion is disclosed in "Semiconductor Wavelength Conversion and Optical Switching Devices", Micro-optics News, vol. 18, No. 3, September 2000 (p.13 to p.18), published by The Japan Society of Applied Physics, The Optical Society of Japan, Group of Micro-optics.

Each of the wavelength converters as shown in FIGS. 6 and 7 converts a single wavelength into another single wavelength, but does not convert the wavelengths of a wavelength group collectively. In this manner, because there is no technique for converting the wavelengths of wavelength group collectively, the following problems will arise with a wavelength group exchange in the optical communication system of the WDM system in which a large number of wavelength signals are multiplexed and transmitted through one optical fiber.

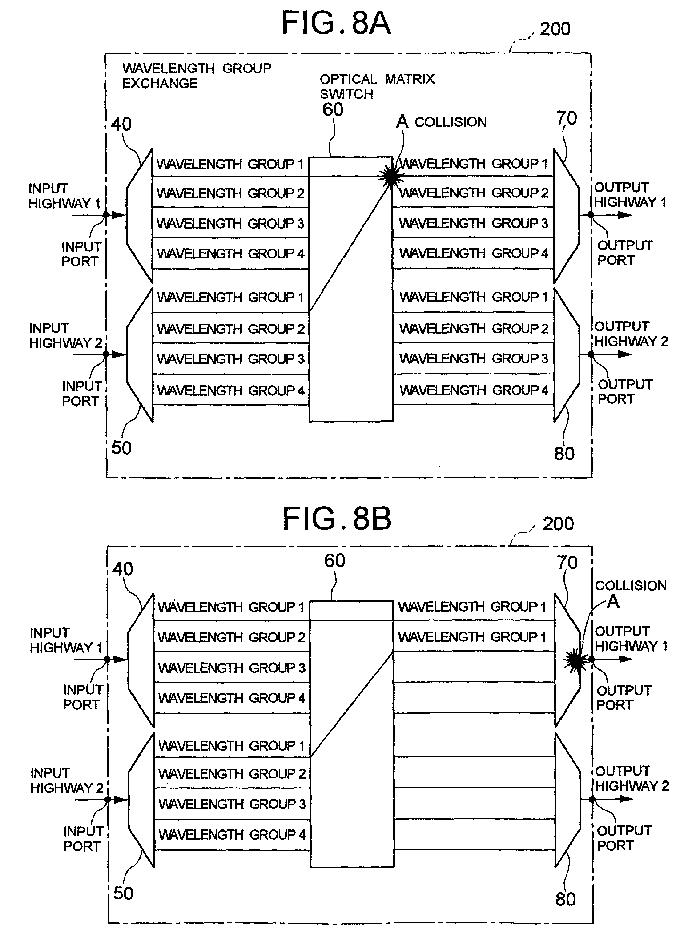

Referring to FIG. 8A, input highways 1 and 2 (connected to input ports of a wavelength group exchange 200) in which the wavelength signals for 160 different waves are multiplexed are connected to optical demultiplexers 40 and 50, respectively. Each of the input wavelength multiplexed signals is demultiplexed into the wavelength groups 1 to 4 for every 40 wavelengths by the demultiplexer 40, 50. Each of the optical demultiplexers 40 and 50 outputs the output wavelength group 1 of λ₁ to λ₄₀, the output wavelength group 2 of λ₄₁ to λ₈₀, the output wavelength group 3 of λ₈₁ to λ₁₂₀, and the output wavelength group 4 of λ ₁₂₁ to λ₁₆₀, supposing that the input wavelengths are λ₁ to λ ₁₆₀. In other words, the optical demultiplexers 40 and 50 have no function of demultiplexing cyclically the wavelength group that is the input wavelength multiplexed signal.

An optical matrix switch 60 is a wavelength group matrix switch for switching each of the wavelength groups for every 40 waves. The wavelength groups 1 to 4 output from the optical matrix switch 60 are multiplexed by optical multiplexers 70, 80 to become a wavelength multiplexed signal of 160 waves again, which is then transmitted through output highways 1, 2 (from the output ports of the wavelength group exchange 200).

In FIG. 8A, suppose that each of the wavelengths for 40 waves contained in wavelength group i (i=1 to 4) is equal between the input highways 1 and 2.

In the wavelength group exchange 200 as shown in FIG. 8A, if it is required that the wavelength group 1 of the input highway 1 and the wavelength group 1 of the input highway 2 are multiplexed and led into the output highway 1, both the wavelength groups 1 of the input highways 1 and 2 will collide at an output port of the wavelength group 1 in the optical matrix switch 60, as indicated by a sign A in FIG. 8A.

Another configuration for leading the wavelength group 1 of the input highway 1 and the wavelength group 1 of the input highway 2 to the output highway 1 involves changing the optical matrix switch 60, as shown in FIG. 8B. In this case, when the wavelength groups 1 are multiplexed by the optical multiplexer 70, they are overlapped, resulting in a collision (interference).

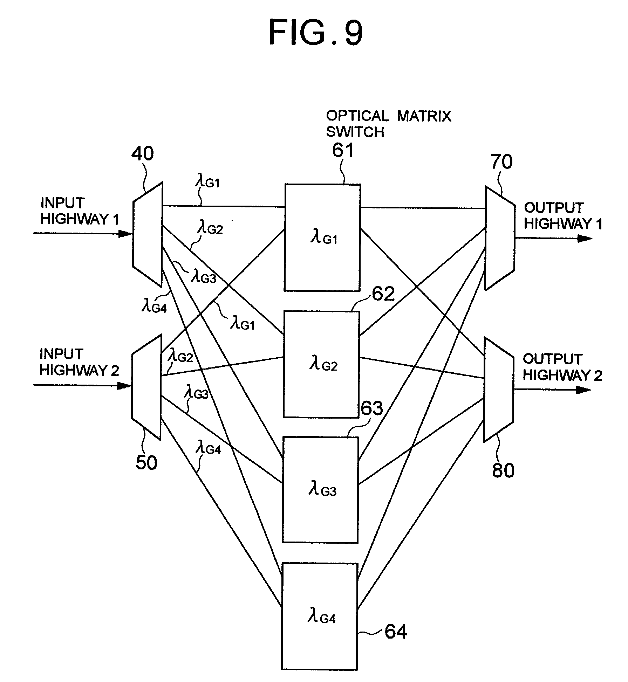

Due to this collision, there is the trouble that both the wavelength groups 1 for the input highways 1 and 2 may interfere with each other. Consequently, it is necessary to switch the wavelength groups not to cause such collision between the wavelength groups, whereby the use efficiency of wavelength group exchange hardware is degraded. FIG. 9 shows a configuration in which the switch settings causing the collision as shown in FIG. 8B are omitted.

Referring to FIG. 9, the wavelength groups λ_{G1} to λ_{G4} are indicated corresponding to the wavelength groups 1 to 4 of FIG. 8. In FIG. 9, optical matrix switches 61 to 64 are provided corresponding to the wavelength groups λ_{G1} to λ_{G4} to switch the input wavelength groups. With this configuration, the switch settings causing the collision (interference) are omitted in advance to reduce the hardware cost, but both the wavelength group λ_{G1} input from the input highway 1 and the wavelength group λ_{G1} input from the input highway 2 cannot be output to the output highway 1 at the same time, whereby any inefficiency problem is not solved.

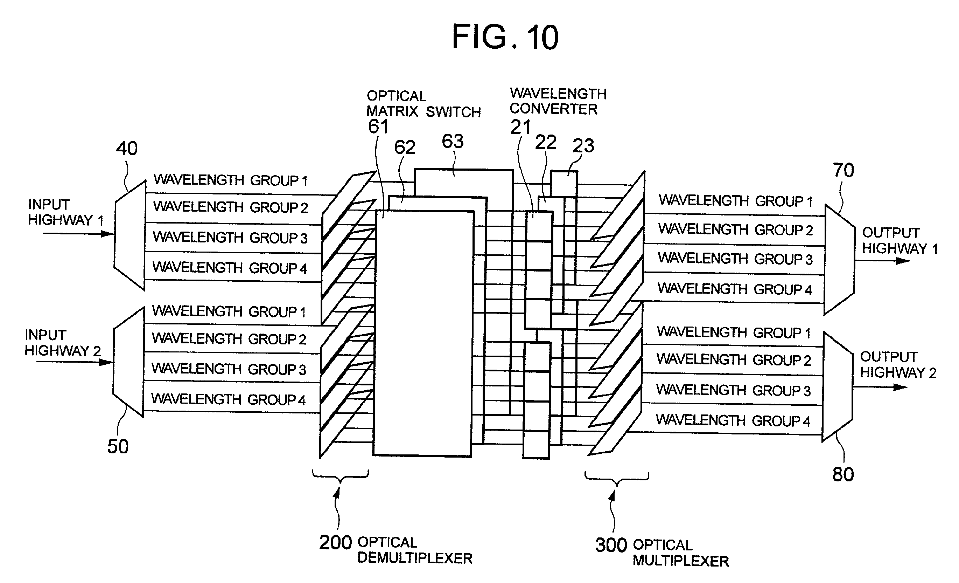

Thus, to avoid this collision phenomenon without decreasing any efficiency of the exchange, a configuration as shown in FIG. 10 is employed. FIG. 10 shows the configuration of the exchange in which collision at the time of switching the wavelength groups is eliminated. In FIG. 10, the same or like parts are denoted by the same numerals as in FIGS. 8 and 9.

In FIG. 10, eight optical demultiplexers 200 are provided corresponding to the wavelength groups 1 to 4 that are output from the optical demultiplexers 40 and 50 for the input highways 1 and 2, and demultiplex the optical signal for each wavelength group into individual wavelengths. Optical matrix switches 61 to 63 are provided to switch each demultiplexed wavelength, and wavelength converters 21 to 23 are provided for converting the wavelengths output from the output ports of the optical matrix switches 61 to 63. Optical multiplexers 300 multiplex signals from the wavelength converters to output the wavelength groups 1 to 4. Further, the wavelength groups 1 to 4 are multiplexed by the optical multiplexers 70 and 80, and led to the output highways 1 and 2.

For example, a 160-wave multiplexed signal is input from each of the input highways 1 and 2, demultiplexed into 40-wave multiplexed signals (wavelength groups 1 to 4) by the optical demultiplexer 40,50. Furthermore, each of the 40-wave multiplexed signals is demultiplexed into individual wavelength signals by the optical demultiplexers 200. Then, the routes of the wavelength signals are switched by the optical matrix switches 61 to 63. The wavelengths of the wavelength signals from the switches are converted by the wavelength converters 21 to 23 not to cause collision, multiplexed into the wavelength groups composed of 40 waves by the optical multiplexers 300. Further, the wavelength groups 1 to 4 are multiplexed by the optical multiplexers 70 and 80 to be output to the output highways 1 and 2.

With the configuration as shown in FIG. 10, the switching for each wavelength signal and the wavelength conversion for each wavelength signal are enabled to avoid the collision at the time of switching the wavelength groups. However, in this configuration, the switching is required for each wavelength signal and the wavelength conversion is required for each wavelength signal, resulting in a new problem that the number of optical matrix switches is increased to resist the miniaturization and the lower cost.

It is an object of the present invention to provide a wavelength group wavelength converter and a wavelength group exchange using the converter in which the wavelength groups can be switched without decreasing any efficiency of the exchange while the miniaturization and the lower cost are kept.

According to an aspect of the present invention, there is provided a wavelength group wavelength converter comprising an optical demultiplexer for demultiplexing an input wavelength multiplexed signal into individual signals, wavelength converters, each wavelength converter converting the wavelength of the demultiplexed signal from the optical demultiplexer, and an optical multiplexer for multiplexing the wavelength converted signals from the wavelength converters.

The optical demultiplexer demultiplexes cyclically a wavelength group that is the input wavelength multiplexed signal. Also, the optical demultiplexer is of an AWG (Arrayed-Waveguide Grating) type. Further, each of the wavelength converters is of the variable wavelength type.

According to another aspect of the invention, there is provided a wavelength group exchange comprising optical demultiplexing means for demultiplexing an input wavelength multiplexed signal into a plurality of wavelength groups, the input wavelength multiplexed signal being input from an input port and having a plurality of wavelength signals multiplexed, switching means for switching each wavelength group from the optical demultiplexing means, wavelength group wavelength converting means for converting the wavelengths of each wavelength group from the switching means for every wavelength group, and optical multiplexing means for multiplexing each output signal of the wavelength group wavelength converting means to send out the wavelength multiplexed signal to an output port.

The wavelength group wavelength converting means comprises wavelength group wavelength converters, each wavelength group wavelength converter having an optical demultiplexer for demultiplexing the wavelength group from the switching means into individual wavelengths, wavelength converters, each wavelength converter converting the demultiplexed wavelength, and an optical multiplexer for multiplexing the wavelength converted signals from the wavelength converters. Also, each of the optical demultiplexers demultiplexes cyclically the wavelength group from the switching means. Each of the optical demultiplexers is of the AWG (Arrayed-Waveguide Grating) type. Further, each of the wavelength converters is of a variable wavelength type.

The operation of the invention will be described below. Each of the wavelength group wavelength converters converts the wavelengths of the switched signal output from the optical switching means capable of switching eachwavelength group. Each of the wavelength group wavelength converters involves demultiplexing the input wavelength group into individual wavelengths, converting each demultiplexed wavelength, and multiplexing each wavelength converted signal into wavelength group. In this case, the optical demultiplexer of each wavelength group wavelength converter uses an element capable of demultiplexing the wavelength group cyclically such as the AWG (Arrayed-Waveguide Grating), whereby the wavelengths of each wavelength group composed of different wavelengths can be converted. Each wavelength group can be switched without worrying about any collision phenomenon at the time of switching each wavelength group, whereby the efficient switching of the wavelength group is implemented.
FIG. 1 is a diagram showing a configuration of a wavelength group wavelength converter according to an embodiment of the present invention;
FIG. 2 is a diagram for explaining a cyclic wavelength demultiplexing for the wavelength groups at an AWG 10 as shown in FIG. 1;
FIG. 3 is a diagram showing a configuration of a wavelength group exchange according to the embodiment of the present invention;
FIG. 4 is a diagram showing details of FIG. 3;
FIG. 5 is a diagram showing a configuration of a wavelength group exchange according to another embodiment of the present invention;
FIG. 6 is a diagram showing an example of a wavelength converter;
FIG. 7 is a diagram showing another example of the wavelength converter;
FIG. 8 is a diagram showing an example of a conventional wavelength group exchange;
FIG. 9 is a diagram showing another example of the conventional wavelength group exchange; and
FIG. 10 is a diagram showing a prior art example in which the wavelength group exchange is configured without using any wavelength group wavelength converter.

The present invention employs a concept of making a wavelength conversion for each wavelength group and realizes a wavelength group exchange using a wavelength group wavelength converter. The preferred embodiments of the invention will be described below with reference to the accompanying drawings.

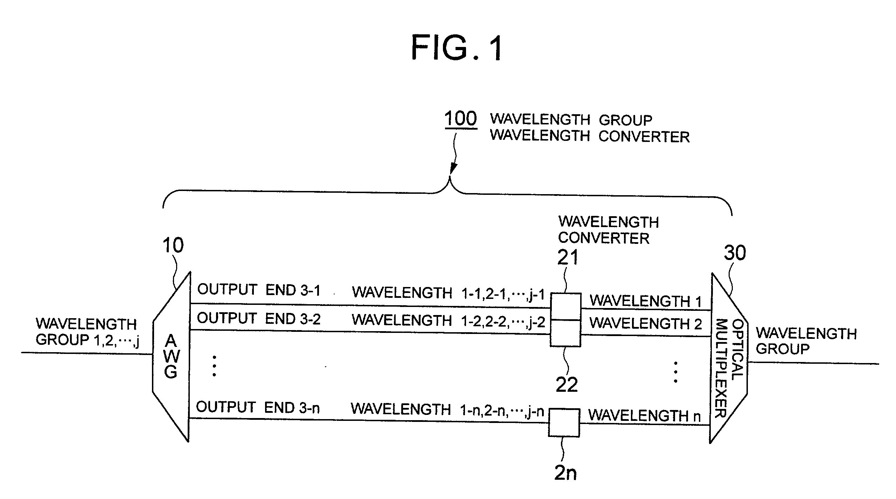

FIG. 1 is a diagram showing a configuration of a wavelength group wavelength converter 100 according to an embodiment of the present invention. In FIG. 1, the wavelength group wavelength converter 100 comprises an optical demultiplexer 10 for demultiplexing an input optical signal having n wavelengths multiplexed into n optical signals, n wavelength converters 21 to 2n, and an optical multiplexer 30 for multiplexing the output signals from the wavelength converters. The optical demultiplexer 10 employs an AWG (Arrayed-Waveguide Grating) for demultiplexing the optical signal having the wavelength group(n wavelengths) cyclically. The AWG for demultiplexing the optical signal cyclically is disclosed in "Full Mesh WDM Network based on cyclic-frequency arrayed-waveguide grating", (Yoshihisa Sakai et al.), TECHNICAL REPORT OF IEICE. OCSS2000-9 (2000-5), pp. 47 to 52, published by The Institute of Electronics, Information and Communication Engineers.

In this cyclical optical signal demultiplexing, a wavelength 1-1 of a wavelength group 1 is sent out to a wavelength demultiplexing output end 3-1, a wavelength 1-2 of a wavelength group 1 to a wavelength demultiplexing output end 3-2, .., and a wavelength 1-n of wavelength group 1 to a wavelength demultiplexing output end 3-n. In contrast, when a wavelength group 2 composed of wavelengths different from the wavelength group 1 is input, a wavelength 2-1 of wavelength group 2 is sent out to the wavelength demultiplexing output end 3-1, a wavelength 2-2 of wavelength group 2 to the wavelength demultiplexing output end 3-2, .., and a wavelength 2-n of wavelength group 2 to the wavelength demultiplexing output end 3-n. The cyclical separation of optical signal for wavelength group can be implemented by employing the Arrayed-Waveguide Grating.

Thus, the wavelengths of the wavelength signals (n optical signals) output from the optical demultiplexer 10 are converted by the corresponding wavelength converters 21 to 2n, respectively, and multiplexed as the wavelength group by an optical multiplexer 30. Employing the optical demultiplexer (AWG) 10 for demultiplexing the optical signal cyclically, the wavelength group wavelength conversion is enabled in the configuration as shown in FIG. 1 even with different input wavelength groups (wavelength groups 1, 2, .., j).

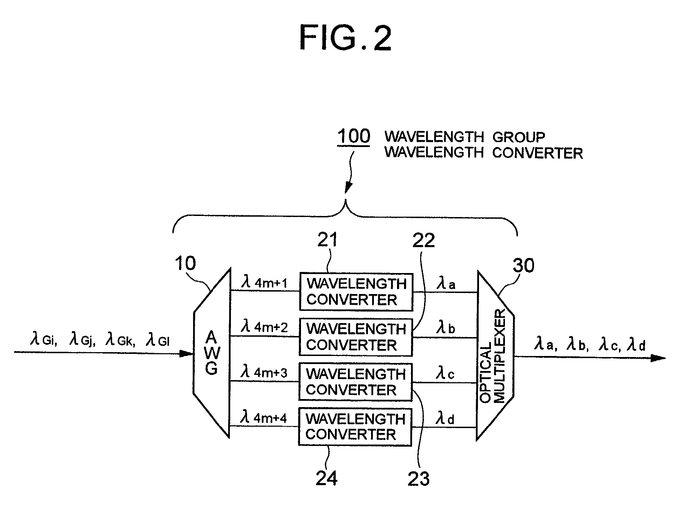

FIG. 2 is a diagram typical representing a relation between an input wavelength group, each demultiplexed wavelength, and a multiplexed wavelength group after wavelength conversion in the configuration of FIG. 1. For the simplicity, each of λ _{Gi}, λ_{Gj}, λ_{Gk} and λ_{Gl} is indicated as one wavelength group, in which λ_{Gi} is composed of wavelengths (λ₁, λ₂, λ₃, λ₄) for m=0, λ_{Gj} is composed of wavelengths (λ₄₊₁, λ₄₊₂, λ₄₊₃, λ₄₊₄) for m=1, λ _{Gk} is composed of wavelengths (λ₈₊₁, λ₈₊₂, λ₈₊₃, λ₈₊₄) for m=2, and λ_{Gl} is composed of wavelengths (λ₁₂₊₁, λ₁₂₊₂, λ₁₂₊₃, λ₁₂₊₄) for m=3.

Any combination of signs (i, j, k, l) can be taken for each wavelength group. The wavelengths demultiplexed by the AWG 10 are λ₄ₘ₊₁, λ₄ₘ₊₂, λ₄ₘ₊₃, λ₄ₘ₊₄ at four demultiplexing output ends of the AWG as seen from the top to down in the drawing. Herein, mis an integer including 0, in which the demultiplexedwavelengths are obtained at the output ends of the AWG 10 cyclically. Also, each of the wavelength converters 21 to 24 makes conversion into a wavelength causing no collision (interference) in multiplexing in the optical multiplexer 30.

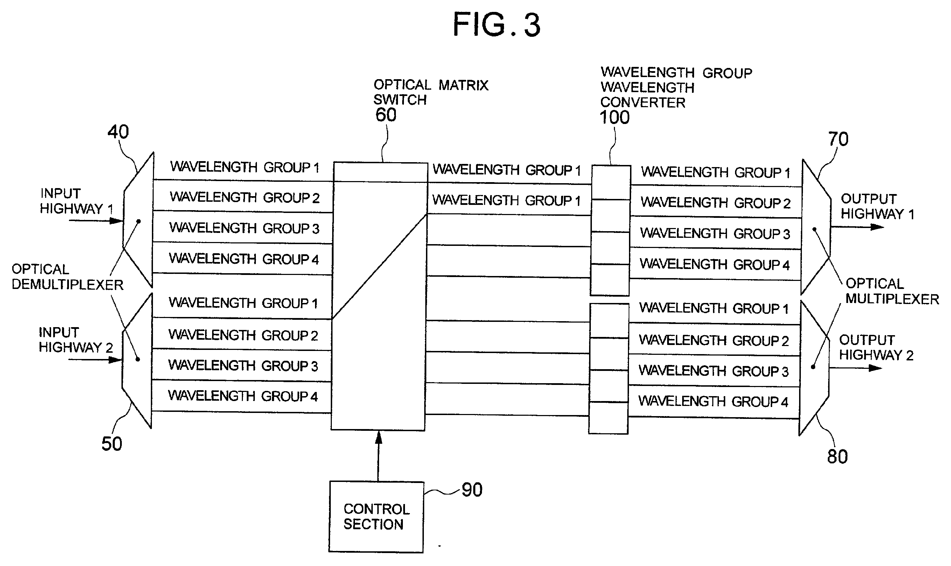

FIG. 3 is a diagram showing an example of the wavelength group exchange using the wavelength group converter as shown in FIGS. 1 and 2. The same or like parts are denoted by the same numerals through FIGS. 1 to 10. As shown in FIG. 3, the wavelength group wavelength converters 100 of FIGS. 1 and 2 are provided corresponding to the output ends of the optical matrix switch 60, each output of the wavelength group wavelength converters 100 being supplied to the optical multiplexer 70, 80. Other configuration is the same as FIG. 8. In this manner, any combination of wavelength groups can be sent out to the output port of the wavelength group exchange (output highway 1, 2). Hence, the collision A between the same wavelength groups as shown in FIG. 8 can be prevented, whereby the efficiency of the exchange is enhanced.

A control section 90 controls the optical matrix switch 60. Since the output wavelengths of the wavelength group wavelength converters 100 are predetermined in FIG. 3, the control section 90 is not required to control variably each converted wavelength of the wavelength group wavelength converters 100, and thereby may be the same as the conventional control section.

As shown in FIG. 3, the wavelength group 1 from the optical demultiplexer 50 is converted into the wavelength group 2 by the wavelength group wavelength converter 100. Therefore, the wavelength group exchange can switch each wavelength group without causing the collision between the wavelength group 1 from the optical demultiplexer 40 and the wavelength group 1 from the optical demultiplexer 50. The wavelength group wavelength converter 100 can cope with any input wavelength group (for all the wavelength groups 1 to 4), as described above, resulting in the configuration of FIG. 3.

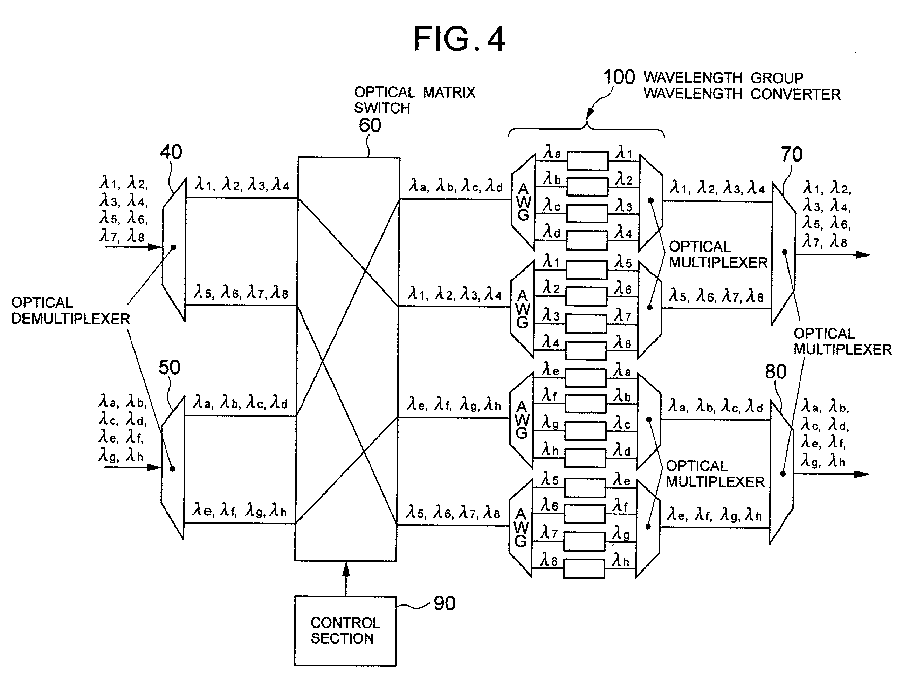

FIG. 4 is a diagram showing a specific example of the configuration of FIG. 3. A wavelength multiplexed signal having wavelengths λ₁ to λ₈ from the input highway 1 (see FIG.1) is input into the optical demultiplexer 40, demultiplexed into two wavelength groups (a wavelength group composed of the wavelengths λ₁ to λ₄ and a wavelength group composed of the wavelengths λ ₅ to λ₈). The two wavelength groups are input into the optical matrix switch 60. Similarly, a wavelength multiplexed signal having wavelengths λₐ to λₕ (λₐ = λ₁ , λ_{b} = λ₂ , λ_{c} = λ₃ , λ _{d} = λ₄ , λₑ = λ₅ , λ_{f} = λ₆ , λ_{g} = λ₇ , λₕ = λ₈) from the input highway 2 is input into the optical multiplexer 50 , demultiplexed into two wavelength groups having four wavelengths. The two wavelength groups are input into the optical matrix switch 60.

The routes of the four wavelength groups are switched by the optical matrix switch 60. Then, each of the four wavelength groups is input into the wavelength group wavelength converter 100 as shown in FIGS. 1 and 2 to make wavelength conversion for each wavelength group. And the wavelength groups are multiplexed again by the optical multiplexers 70, 80 and led to the output highways 1, 2 (see FIG. 3). In this manner, each of the wavelength group wavelength converters 100 of the wavelength group exchange makes the wavelength conversion for the input wavelength group, whereby the wavelength group switching can be made without causing any collision phenomenon. In FIG. 4, the control section 90 controls the optical matrix switch 60. The control section 90 may only control the optical matrix switch 60 in the configuration of FIG. 4.

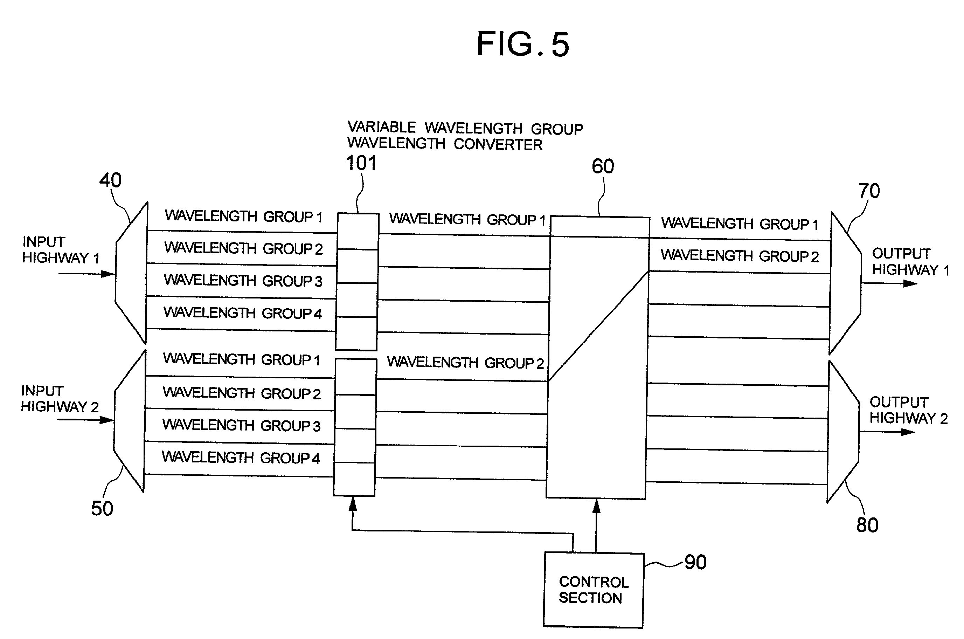

FIG. 5 is an example of a configuration in which a wavelength group wavelength converter 101 having a wavelength conversion circuit capable of varying the output wavelength is disposed on an input side of the optical matrix switch 60, in which the same or like parts are denoted by the same numerals as in FIG. 3. In this manner, the wavelengths of each wavelength group are variable on the input side of the optical matrix switch 60 according to control of the control section 90, whereby the optical matrix switch 60 can switch the routes of the input wavelength groups more flexibly. In FIG. 5, the control section 90 also controls the variable wavelength group wavelength converter 101 for converting the input wavelength groups into the wavelength groups causing no collision (interference) in multiplexing the wavelength groups in the optical multiplexers 70, 80, in addition to the optical matrix switch 60.

The wavelength conversion element of FIGS. 1 to 5 may employ the element as described in the paragraph of the Description of the Related Art.

As described above, with this invention, the wavelength group is converted collectively, and the optical demultiplexer for demultiplexing the wavelength group employs the AWG or the like with a function of demultiplexing the wavelength group cyclically. Therefore, the collision of wavelength groups can be avoided in the wavelength group exchange for switching each wavelength group. Hence, there is the effect that the wavelength group switching can be realized with an extremely simple configuration and at high efficiency.

## Claims

1. A wavelength group wavelength converter comprising:
an optical demultiplexer for demultiplexing an input wavelength multiplexed signal into individual signals;
wavelength converters, each wavelength converter converting the wavelength of the demultiplexed signal from said optical demultiplexer; and
an optical multiplexer for multiplexing the wavelength converted signals from said wavelength converters.

2. The wavelength group wavelength converter according to claim 1, wherein said optical demultiplexer cyclically demultiplexes a wavelength group that is said input wavelength multiplexed signal.

3. The wavelength group wavelength converter according to claim 2, wherein said optical demultiplexer is of an AWG (Arrayed-Waveguide Grating) type.

4. The wavelength group wavelength converter according to Claim 1, 2 or 3, wherein said wavelength converter is of a variable wavelength type.

5. A wavelength group exchange comprising:
optical demultiplexing means for demultiplexing an input wavelength multiplexed signal into a plurality of wavelength groups, said input wavelength multiplexed signal being input from an input port and having a plurality of wavelength signals multiplexed;
switching means for switching each wavelength group from said optical demultiplexing means;
wavelength group wavelength convertingmeans for converting the wavelengths of each wavelength group from said switching means for every wavelength group; and
optical multiplexing means for multiplexing each output signal of said wavelength group wavelength converting means to send out the wavelength multiplexed signal to an output port.

6. The wavelength group exchange according to claim 5, wherein said wavelength group wavelength converting means comprises wavelength group wavelength converters, each wavelength group wavelength converter having:
an optical demultiplexer for demultiplexing saidwavelength group from said switching means into individual wavelengths;
wavelength converters, each wavelength converter converting said demultiplexed wavelength; and
an optical multiplexer for multiplexing the wavelength converted signals from said wavelength converters.

7. The wavelength group exchange according to claim 6, wherein said optical demultiplexer cyclically demultiplexes said wavelength group from said switching means.

8. The wavelength group exchange according to claim 7, wherein said optical demultiplexer is of an AWG (Arrayed-Waveguide Grating) type.

9. The wavelength group exchange according to claim 6, 7 or 8, wherein said wavelength converter is of a variable wavelength type.
